# EUROPEAN PATENT APPLICATION

(11) **EP 4 741 070 A1**
(43) Date of publication of application: **13.05.2026**
(21) Application number: 25845854.6
(22) Date of filing: 26.06.2025
(51) Int. Cl.: B05C 5/02, B05C 11/10, H01M 4/04

(54) **SHIM PLATE AND SLOT DIE COATER INCLUDING SAME**

(30) Priority: 11.09.2024 KR 20240124046
(71) Applicant: LG ENERGY SOLUTION, LTD., Seoul 07335 (KR)
(72) Inventor: JANG, Jiwoong, Daejeon 34122 (KR); AHN, Byoung Hoon, Daejeon 34122 (KR); PARK, Seung Seo, Daejeon 34122 (KR); HWANG, Yujin, Daejeon 34122 (KR); LEE, Jungwon, Daejeon 34122 (KR); KIM, Joohee, Daejeon 34122 (KR)
(74) Representative: Goddar, Heinz J.
(86) International application number: PCT/KR2025/008940
(87) International publication number: WO 2026/059045

(57) **Abstract**

A shim plate including a shim body and a coating layer is provided. The shim body is made of a stainless steel material. The coating layer is coated on a surface of the shim body. The shim plate is disposed between a first die block and second die block to create slot die coater with a slot defined within.

## Description

### [Technical Field]

The present disclosure relates to a shim plate and a slot die coater including the same.

### [Background]

Secondary batteries refer to batteries that are chargeable and dischargeable, unlike primary batteries that are not chargeable, and are applied not only to portable devices but also to electric vehicles (EVs), hybrid electric vehicles (HEVs), and the like driven by electric drive sources.

Types of secondary batteries currently in widespread use include lithium-ion batteries, lithium polymer batteries, nickel-cadmium batteries, nickel-metal hydride batteries, nickel-zinc batteries, and the like. An operating voltage of such a unit secondary battery cell, i.e., a unit battery cell, is about 2.5 V to 4.6 V. Therefore, when a higher output voltage is required, a plurality of battery cells are connected in series to configure a battery pack. In addition, a plurality of battery cells may be connected in parallel to configure a battery pack according to the charge/discharge capacity required for a battery pack. Accordingly, the number of battery cells included in the battery pack may be set variously according to the required output voltage or charge/discharge capacity.

When configuring a battery pack by connecting a plurality of battery cells in series or in parallel, in general, a battery module including at least one battery cell, preferably a plurality of battery cells, is first configured, and then a battery pack is configured by adding other components while using the at least one battery module. Here, the battery module refers to a component in which a plurality of battery cells are connected in series or in parallel, and the battery pack refers to a component in which a plurality of battery modules are connected in series or in parallel to increase a capacity, an output, and the like.

Note that in a process of manufacturing such a secondary battery, during a slot die coating process in which an electrode active material slurry is applied to an electrode current collector, it is necessary to perform a thickness polishing process using a conventional SUS430 material in order to control the tolerance of the shim thickness. However, the shim bending occurs due to heat generation during the shim thickness polishing process, which increases the machining difficulty and leads to a low yield of non-defective products. In addition, the above-described material has the disadvantages of a long manufacturing period and a very high handling cost.

### [Disclosure]

### [Technical Problem]

An object of the present disclosure is to minimize the thickness tolerance of a shim plate.

Another object of the present disclosure is to secure the yield and economic efficiency of a shim plate.

Still another object of the present disclosure is to shorten the manufacturing period of a shim plate.

However, the technical problems to be solved by the present disclosure are not limited to those described above, and other problems not explicitly mentioned will be apparent to those skilled in the art from the following description of the disclosure.

### [Technical Solution]

To solve the above-described problems, a shim plate according to an exemplary aspect of the present disclosure includes: a shim body including stainless steel; and at least one coating layer coated on a surface of the shim body.

In an aspect of the present disclosure, the shim plate is configured to discharge an active material, and the shim body may include a first side end portion in the shape of a plate provided on one side; a second side end portion in the shape of a plate provided on the other side; and at least one rib provided between the first side end portion and the second side end portion and arranged parallel to the first side end portion and the second side end portion.

Preferably, an opening portion in which at least one region is cut from an end of the shim body may be provided between the first side end portion and the rib, between the rib and the second side end portion, or between the ribs.

In another aspect of the present disclosure, the shim body may include an SUS304 material.

Preferably, the coating layer is adhesive.

In another aspect of the present disclosure, the coating layer is elastic.

In one aspect of the present disclosure, the coating layer may include a fluorocarbon resin coating material.

Preferably, the coating layer may be coated by a spray method or a multiple-overlapping coating method.

In one aspect of the present disclosure, the coating layer may include a plurality of coating layers.

Preferably, a thickness of one layer of the coating layer may be configured to be 3 to 6 µm.

In another aspect of the present disclosure, the rib may be configured to have at least one step in a thickness direction of the rib.

Preferably, the rib may include a central portion provided at a center, and step portions provided on both side ends of the central portion and configured to have a thickness smaller than that of the central portion.

Preferably, a thickness tolerance of the shim plate may fall within a range of 99% to 102%.

Further, the present disclosure provides a slot die coater including a first die block; a second die block configured to face the first die block; and at least one shim plate according to the above-described exemplary aspect, the shim plate being interposed between the first die block and the second die block to form a slot.

In addition, to solve the above-described problems, a method for manufacturing a shim plate according to an exemplary aspect of the present disclosure includes: preparing a shim body; cleaning a surface of the shim body to remove contaminants; coating at least one coating layer on the shim body by a spray method or a multiple-overlapping coating method; and curing the coating layer.

### [Advantageous Effects]

According to the present disclosure, the thickness tolerance of the shim plate can be minimized.

In addition, according to the present disclosure, the yield can be improved because the shim plate is not subjected to the polishing process.

In addition, according to the present disclosure, economic efficiency can be secured.

In addition, according to the present disclosure, the manufacturing period of the shim plate can be shortened.

However, the effects achieved by the present disclosure are not limited to those described above, and other technical effects not explicitly mentioned will be apparent to those skilled in the art from the following description of the disclosure.

### [Description of Drawings]

The accompanying drawings illustrate preferred exemplary aspects of the present disclosure and, together with the following description of the disclosure, serve to provide a better understanding of the technical features of the present disclosure, and thus the present disclosure should not be construed as being limited to the drawings.
FIG. 1 is a perspective view of a slot die coater according to an exemplary aspect of the present disclosure.
FIG. 2 is a cross-sectional view of FIG. 1.
FIG. 3 is an exploded perspective view of FIG. 1.
FIG. 4 is a plan view of a shim plate according to an exemplary aspect of the present disclosure.
FIG. 5 is a plan view of a shim plate according to another exemplary aspect of the present disclosure.
FIG. 6 is a perspective view of a shim plate according to still another exemplary aspect of the present disclosure.
FIG. 7 is a graph showing a tolerance level versus a thickness of the shim plate.

### [Detailed Description]

The advantages and features of the present disclosure, and a method for achieving the same will become apparent with reference to exemplary aspects described in detail below together with the accompanying drawings. However, the present disclosure is not limited to the exemplary aspects disclosed below, but can be implemented in a variety of different forms. The exemplary aspects are provided to only complete the present disclosure and to allow one skilled in the art to which the present disclosure belongs to completely understand the category of the present disclosure. The present disclosure is only defined by the category of the claims. Thus, in some exemplary aspects, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. Conversely, when an element is referred to as being "directly on" another element, it may mean that there is no intervening element present. In addition, when an element such as a layer, a film, a region, a plate, or the like is referred to as being "below" another element, it may be "directly below" another element or an intervening element may also be present. Conversely, when an element is referred to as being "directly below" another element, it may mean that there is no intervening element present.

An expression that two comparative targets are the same means that they are 'substantially the same'. Accordingly, 'substantially the same' may encompass a deviation of, for example, up to 5%, which is regarded as a low level in the art. In addition, a uniform parameter in a predetermined region may refer to uniform from the average point of view.

Throughout the specification, unless otherwise stated, each element may be interpreted as being in the singular or plural form.

When a component is described as being arranged "above (or below)" or "on (or under") another component, it is to be understood that the component may be arranged in contact with an upper surface (or a lower surface) of another component, or an additional component may be interposed between the two components.

Additionally, when a component is described as being "connected", "coupled", or "joined" to another component, it is to be understood that the components may be directly connected or coupled to each other, but the components may be indirectly "connected", "coupled", or "joined" via an additional component interposed therebetween.

Throughout the specification, the description "A and/or B" refers to A, B, or A and B, unless otherwise stated, and the description "C to D" means C or more and D or less, unless otherwise stated.

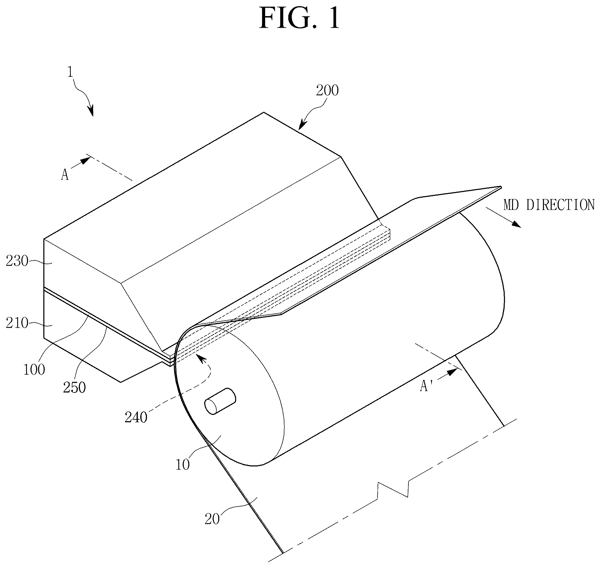

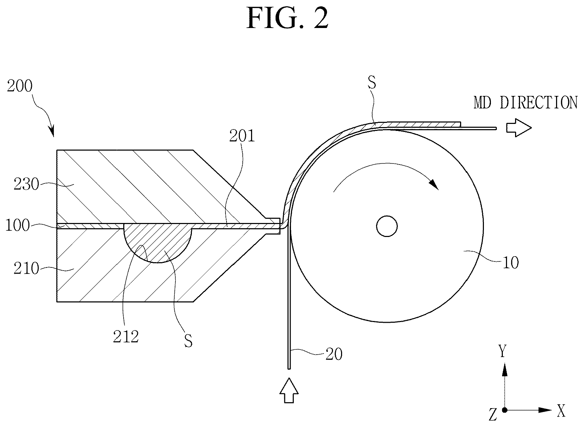

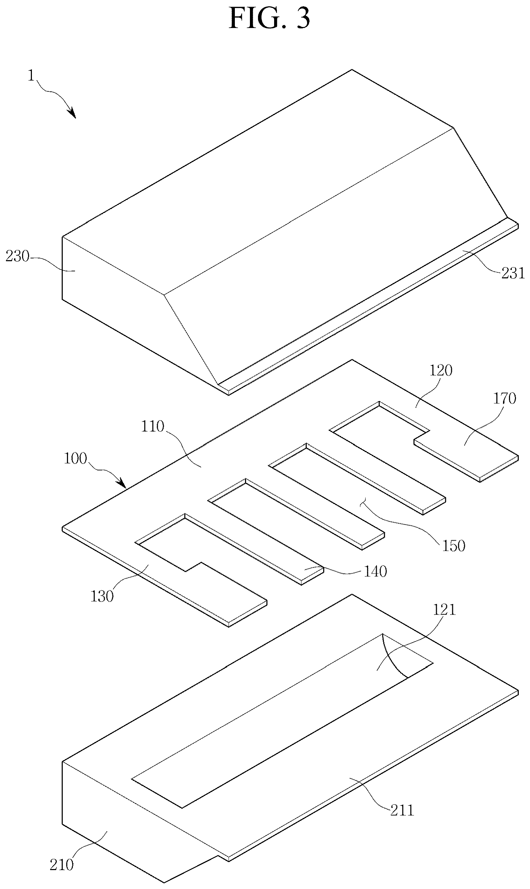

FIG. 1 is a drawing for illustrating a slot die coater 1 according to an exemplary aspect of the present disclosure, and FIG. 2 is a cross-sectional view of FIG. 1. More specifically, FIG. 2 is a cross-sectional view taken along line A-A' of FIG. 1. FIG. 3 is an exploded perspective view of FIG. 1.

Referring to FIGS. 1 to 3, in an electrode manufacturing method using the slot die coater 1, an electrode active material slurry S discharged from the slot die coater 1 is applied onto a substrate 20 conveyed by a coating roll 10. Specifically, the coating roll 10 rotates in the MD direction of FIG. 1, and accordingly, the substrate 20 is also conveyed in the MD direction of FIG. 1, and the slurry S is coated on a surface of the substrate 20. The electrode active material slurry S discharged from the slot die coater 1 is widely applied to one surface of the substrate 20 to form an electrode active material layer.

Referring to FIGS. 1 to 3, the slot die coater 1 includes a die block 200, and a shim plate 100 interposed in the die block 200. Specifically, the die block 200 may include a first die block 210, and a second die block 230 configured to face the first die block 210. The shim plate 100 may be configured to be interposed between the first die block 210 and the second die block 230 to form a slot.

The slot die coater 1 includes the first die block 210 and the second die block 230, and forms a slot 201 between the first die block 210 and the second die block 230. The electrode active material slurry S supplied from a feed unit (not shown) is received in a manifold 212. The electrode active material slurry S is discharged through a discharge port 240 in communication with the slot 201 to form an electrode active material layer. The first die block 210 includes a first die lip 211, which is a tip portion of the first die block 210. The second die block 230 includes a second die lip 231, which is a tip portion of the second die block 230.

A coating width of the electrode active material layer coated on the substrate 20 is determined by a width of the slot 201. If a change in the coating width is required, various coating widths can be implemented by changing the shim plate 100 that determines an internal space of the manifold 212 and a width of the slot 201. That is, the coating width can be adjusted by changing the size and shape of the shim plate 100 inserted between the first die block 210 and the second die block 230.

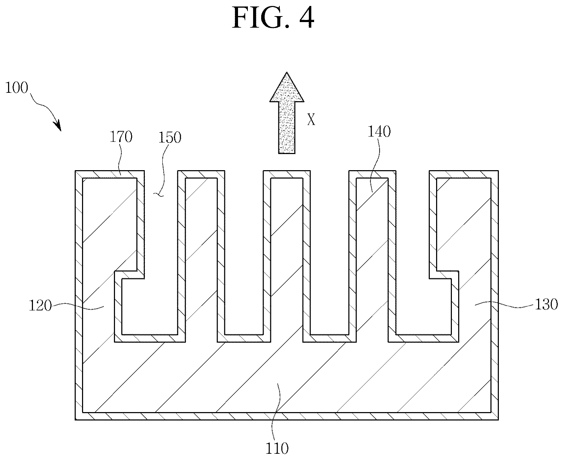

FIG. 4 is a diagram for illustrating the shim plate 100 according to an exemplary aspect of the present disclosure.

Referring to FIG. 4, the sim plate 100 includes a shim body and at least one coating layer 170. The shim plate 100 is configured to discharge an active material and is mounted inside the slot die coater 1. Specifically, the shim plate 100 may be arranged in a state of being mounted in the die block 200. Specifically, the shim plate 100 may be arranged in a state of being interposed between the first die block 210 and the second die block 230. The shim plate 100 may determine a coating width of the coating layer 170 applied on the substrate 20.

A height of the shim plate 100 may match a gap between the first die block 210 and the second die block 230. That is, the height of the shim plate 100 may correspond to a vertical width (Y direction, slot gap) of the slot 201 of the slot die coater 1.

The shim body includes a stainless steel material. Preferably, the shim body may include an SUS304 material. However, the material of the shim body is not limited thereto.

For example, the shim body of the related art includes an SUS430 material in many cases. The SUS430 material is a material having excellent processability due to its relatively low material strength. A heat treatment process is essential to relieve stress in the material. Since the material itself is magnetic, a polishing process can be applied, allowing for tighter thickness tolerance control than SUS304. However, a separate demagnetization process is required to remove magnetism. Note that during the material polishing process, surface processing is performed using a grinding stone after the position is fixed by the material's own magnetism. In this case, the SUS430 material having excellent processability enables tighter thickness tolerance control through the polishing process. However, the above material has a problem in that shim bending occurs due to heat generation during the polishing process, which increases the machining difficulty and leads to a low yield of non-defective products. In addition, the SUS430 material had a problem of a very high handling cost.

However, since the shim body of the present disclosure includes an SUS304 material, the yield issue can be overcome by eliminating the need for a polishing process. In addition, the SUS304 material is advantageous in terms of economic efficiency due to its relatively lower handling cost compared to the SUS430 material. In addition, according to the above configuration, the manufacturing period of the shim plate 100 can be shortened compared to the related art.

Referring back to FIGS. 3 and 4, the shim body may include a base portion 110, a first side end portion 120, a second side end portion 130, and a rib 140. The shim body may further include an opening portion 150.

The base portion 110 may be configured to have a plate shape extending in one direction. For example, the extension direction of the base portion 110 may be perpendicular to the discharge direction of the slurry S.

The first side end portion 120 and the second side end portion 130 may extend from the base portion 110. Preferably, the first side end portion 120 and the second side end portion 130 may extend in the discharge direction from the base portion 110. The first side end portion 120 and the second side end portion 130 may each be formed in a substantially plate-like shape. The first side end portion 120 may be provided on one side of the shim body. For example, the first side end portion 120 may be provided on the left side with respect to the discharge direction. The second side end portion 130 may be provided on the other side of the shim body. That is, the second side end portion 130 may be provided on an opposite side to the first side end portion 120. For example, the second side end portion 130 may be provided on the right side with respect to the discharge direction. That is, the first side end portion 120 and the second side end portion 130 may have a substantially plate-shaped structure provided at both ends of the base portion 110, respectively.

The shim body may include at least one rib 140. For example, the shim body may include a plurality of ribs 140. The rib 140 may be provided between the first side end portion 120 and the second side end portion 130. The rib 140 may be arranged parallel to the first side end portion 120 and the second side end portion 130. When one rib 140 is provided, an interval between the first side end portion 120 and the rib 140 may be configured to be the same as an interval between the second side end portion 130 and the rib 140. On the other hand, when a plurality of ribs 140 are provided, an interval between the first side end portion 120 and the rib 140, an interval between the second side end portion 130 and the rib 140, and an interval between the ribs 140 may be configured to be the same.

The opening portion 150 may be provided in a space between the first side end portion 120 and the rib 140, between the second side end portion 130 and the rib 140, or between the ribs 140. That is, the shim body may have the opening portion 150 in which one region is cut. The width of the opening portion 150 of the shim plate 100 is designed such that a slurry S application region having a predetermined width is formed on the substrate 20 by the opening portion 150, and non-coated regions are formed on both sides of the slurry S application region.

For example, a slurry S application region in a stripe pattern shape may be formed on the substrate 20. In such a case, the shim plate 100 as shown in FIG. 4 is used. Referring to FIG. 4, the shim plate 100 has a plurality of openings 150 in which one region is intermittently cut. When such a shim plate 100 is used, a number of slurry S application regions corresponding to the number of opening portions 150 are formed on the substrate 20 in a stripe pattern, and non-coated regions are formed on both sides of each slurry S application region. More specifically, the slurry S is discharged in the X direction, and the discharged slurry S is applied onto the substrate 20. The substrate 20 moves in the X direction, and accordingly, the slurry S can be continuously applied onto the substrate 20.

The slot die coater 1 of the present disclosure is a device having a slot and configured to coat the substrate 20 with the slurry S through the slot. The substrate 20 below refers to an electrode current collector, and the slurry S refers to the electrode active material slurry S. However, the scope of the present disclosure is not necessarily limited thereto. For example, the substrate 20 may be a porous support constituting a separator, and the slurry S may be an organic material having a composition or properties different from those of the active material. That is, if a thin film coating is required, the types of substrate 20 and slurry S are not limited.

In one aspect of the present disclosure, the shim plate 100 includes at least one coating layer 170.

Referring to FIG. 4, the coating layer 170 is coated on the surface of the shim body. The coating layer 170 may preferably be uniformly coated over the entire region of the shim body. The coating layer 170 may have adhesiveness. With this configuration, the coating layer 170 can be stably coated on the shim body. That is, according to the above configuration, the durability of the shim plate 100 can be improved.

In another aspect of the present disclosure, the coating layer 170 may be configured to have elasticity.

The shim plate 100 is preferably made of a material with sealability, because it also serves as a gasket to prevent the slurry S from leaking into the gap between the first die block 210 and the second die block 230, except for the area where the discharge port 240 is formed.

In another aspect of the present disclosure, the coating layer 170 may include a fluorocarbon resin coating material. For example, the coating layer 170 may be a Teflon coating layer 170. However, the material of the coating layer 170 is not limited to the fluorocarbon resin. Any material that can control the thickness of the coating layer 170 to a thin level and has adhesiveness is to be included within the scope of the coating layer 170 of the present disclosure.

In this regard, when the shim body includes a SUS304 material, there are advantages in terms of yield and economic efficiency as described above. However, it is difficult to apply a polishing process to the SUS304 material, which makes it challenging to control the thickness tolerance of the shim plate 100. That is, since the SUS304 material, which is the most common and general SUS processing material, is non-magnetic, the polishing process cannot be applied, and therefore, it is important to select the original thickness of the material. In addition, SUS304 has a higher nickel content and greater material strength than SUS430, which is disadvantageous in terms of processability.

Accordingly, in the present disclosure, a SUS304 material, which is excellent in terms of yield and economic efficiency, is applied to the shim body, and at least one coating layer 170 is provided on the shim body to enable control of the thickness tolerance of the shim plate 100. That is, according to the configuration of the present disclosure, it is possible to provide the shim plate 100 that ensures yield and economic efficiency, while also enabling control of the thickness tolerance.

In one aspect of the present disclosure, the coating layer 170 may be coated by a spray method or a multiple-overlapping coating method. For example, a coating material can be uniformly applied to the surface of the shim body in liquid form to completely cover the shim body.

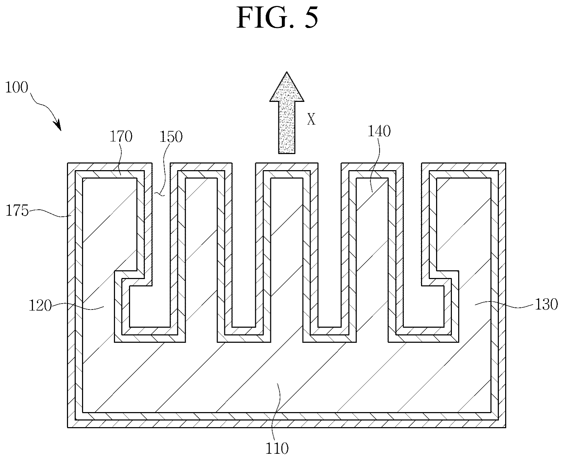

FIG. 5 is a diagram for illustrating the shim plate 100 according to another exemplary aspect of the present disclosure.

Referring to FIG. 5, preferably, the coating layer 170 may include a plurality of coating layers 170 and 175.

For example, the thickness of one layer of the coating layer 170 may be about 3 to 6 µm. If the thickness of one layer of the coating layer 170 is less than about 3 µm, it becomes excessively thin, requiring multiple coating processes to achieve the desired final thickness of the shim plate 100. Accordingly, it may be disadvantageous in terms of economic efficiency. On the other hand, if the thickness of one layer of the coating layer 170 exceeds about 6 µm, it becomes excessively thick, increasing the possibility of a thickness deviation. Therefore, the thickness of one layer of the coating layer 170 is preferably about 3 to 6 µm. That is, according to the present disclosure, the desired final thickness of the shim plate 100 can be achieved by including a plurality of coating layers 170 and 175 each having a thickness of about 3 to 6 µm.

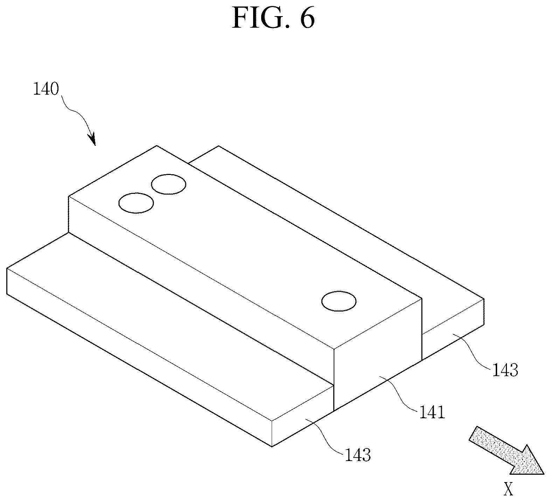

FIG. 6 is a diagram for illustrating the shim plate 100 according to still another exemplary aspect of the present disclosure.

Referring to FIG. 6, the rib 140 may be configured to have at least one step in the thickness direction of the rib 140. For example, the rib 140 may include a central portion 141 and a step portion 143.

The central portion 141 may be provided at the center of the rib 140. In this case, a height of the rib 140 in the thickness direction can match the gap between the first die block 210 and the second die block 230. That is, the thickness of the rib 140 may correspond to the vertical width (Y direction, slot gap) of the slot 201. Accordingly, the slurry S is prevented from passing through the central portion 141.

The step portion 143 may be provided on each of both side ends of the central portion 141. The step portion 143 may be configured to have a thickness smaller than that of the central portion 141. In this case, the thickness refers to the height of the rib 140. That is, the height of the step portion 143 may be configured to be smaller than that of the central portion 141.

According to the above configuration, the amount of slurry S discharged in the region where the step portion 143 is located is less than the amount of slurry S discharged via the central region of the opening portion 150. Accordingly, when applying an active material to the substrate 20, a sliding portion between the coated portion and the non-coated portion can be easily formed.

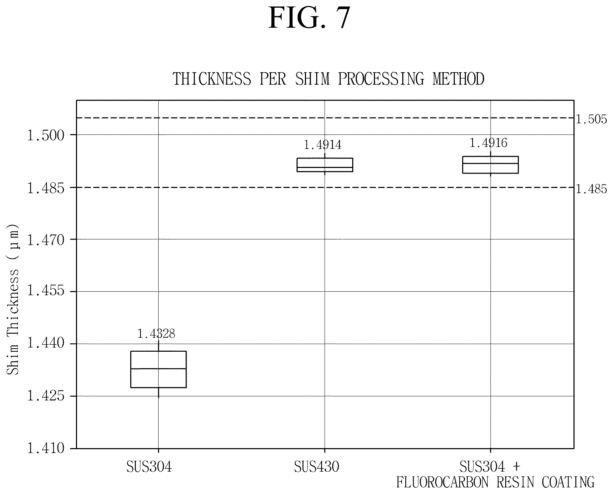

FIG. 7 is a graph showing a tolerance level versus a thickness of the shim plate 100.

As shown, according to the configuration of the present disclosure including the shim body and the coating layer 170, the thickness tolerance of the shim plate 100 can be controlled within a range of about 99% to 102%. For example, referring to FIG. 7, when the target thickness of the shim plate 100 is about 1.500 µm, the thickness tolerance of the shim plate 100 can be controlled within a range of about ±0.010 µm.

Note that the die block 200 according to an exemplary aspect of the present disclosure includes the first die block 210 and the second die block 230. The shim plate 100 may be interposed between the first die block 210 and the second die block 230 to form the slot 201.

The slot 201 is formed between the first die block 210 and the second die block 230 facing each other. The shim plate 100 is interposed therein to provide a gap therebetween, thereby forming the slot 201 corresponding to a passage through which the slurry S can flow. The thickness of the shim plate 100 determines the vertical width (Y direction, slot gap) of the slot 201.

As shown in FIG. 4, the shim plate 100 may have a plurality of opening portions 150 in which one region is intermittently cut. Accordingly, a discharge port 240 through which the slurry S can be discharged to the outside is formed between the first die lip 211 and the second die lip 231, which are the respective tip portions of the first die block 210 and the second die block 230. The discharge port 240 may be referred to as a space formed by the separation between the first die lip 211 and the second die lip 231.

Referring back to FIGS. 2 and 3, either the first die block 210 or the second die block 230 may be provided with the manifold 212 having a predetermined depth and communicating with the slot 201. Although not shown in the drawings, the manifold 212 is connected via a supply pipe to a slurry S supply chamber (not shown) installed outside, and receives the slurry S. When the manifold 212 is filled with the slurry S, the slurry S is induced to flow along the slot 201 and discharged to the outside through the discharge port 240.

According to the die block 200 having such a configuration, the coating roll 10, which is rotatably provided, is arranged in front of the die block 200, and by rotating the coating roll 10, the substrate 20 to be coated is conveyed while the slurry S is discharged and continuously brought into contact with the surface of the substrate 20, so that the slurry S can be applied to the substrate 20. Alternatively, the supply and interruption of the slurry S may be alternately performed to intermittently form a pattern coating on the substrate 20.

Note that a method for manufacturing the shim plate 100 includes the following steps.

### (First step) First step of preparing a shim body.

The shim body preferably includes the SUS304 material described above. This is a step of preparing a shim body having a substantially plate-like shape and including the base portion 110, the first side end portion 120, the second side end portion 130, and at least one rib 140.

### (Second step) Second step of cleaning the surface of the shim body to remove contaminants.

The second step is a surface preparation step, and proper surface preparation plays an important role in achieving a durable and effective coating. The surface is cleaned to remove contaminants such as dust, grease, and rust. In this step, abrasive blasting, chemical cleaning, or the like may be applied to ensure an optimal surface for coating.

### (Third step) Third step of coating at least one coating layer 170 on the shim body by a spray method or a multiple-overlapping coating method.

For example, a fluorocarbon resin coating may be applied in this step. In this case, the coating layer 170 may be formed on the shim body by a spray method or a multiple-overlapping coating method. In this case, the coating layer 170 may be composed of multiple layers. Note that the thickness of one coating layer 170 may be controlled within a range of about 3 to 6 µm.

Note that as a preceding step of the third step in which coating is performed, a masking step may be further included. That is, the masking step is a process of masking a region that should be kept uncoated. That is, an operation of covering or protecting a region to be kept uncoated with tape may be additionally performed.

### (Fourth step) Fourth step of curing the coating layer 170.

When the coating is completed, the coating layer 170 is subjected to a curing process. Curing is usually performed in an oven or controlled heating environment. In this step, the coating layer 170 is heated to a specific temperature and bonded and solidified to the surface of the shim body. Depending on the curing environment control in the curing step, desired coating characteristics can be achieved.

According to the above-described manufacturing method, an SUS304 material, which is excellent in terms of yield and economic efficiency, is applied to the shim body, and at least one coating layer 170 is provided on the shim body to enable control of the thickness tolerance of the shim plate 100. That is, according to the manufacturing method of the present disclosure, it is possible to manufacture the shim plate 100 that ensures yield and economic efficiency, while also enabling control of the thickness tolerance.

Note that although the terms indicating directions such as upper and lower are used herein, these terms are used only for convenience of description, and it is apparent to one skilled in the art that these terms may change depending on the position of the target object or the position of the observer.

Although the present disclosure has been described with reference to the limited exemplary aspects and drawings, the present disclosure is not limited thereto, and a variety of modifications and variations can be made within the technical spirit of the present disclosure and the equivalent range of the claims described below by one skilled in the art to which the present disclosure belongs.

## Claims

1. A shim plate comprising:
a shim body including stainless steel; and
a coating layer coated on a surface of the shim body.

2. The shim plate of claim 1, wherein
the shim plate is configured to discharge an active material, and
the shim body includes:
a first side end portion disposed on a first side of the shim body,
a second side end portion disposed on a second side of the shim body, and
a rib positioned between and parallel to the first side end portion and the second side end portion,
wherein the first side end portion and the second side end portion are in a shape of a plate.

3. The shim plate of claim 2, further comprising an opening positioned between the first side end portion and the rib, between the rib and the second side end portion, or between the ribs.

4. The shim plate of claim 1, wherein the shim body includes an SUS304 material.

5. The shim plate of claim 1, wherein the coating layer is an adhesive.

6. The shim plate of claim 1, wherein the coating layer is elastic.

7. The shim plate of claim 1, wherein the coating layer includes a fluorocarbon resin coating material.

8. The shim plate of claim 1, wherein the coating layer is coated by a spray method or a multiple-overlapping coating method.

9. The shim plate of claim 1, wherein the coating layer includes a plurality of coating layers.

10. The shim plate of claim 1, wherein a thickness of the coating layer is in a range from 3 to 6 µm.

11. The shim plate of claim 2, wherein the rib includes a step in a thickness direction of the rib.

12. The shim plate of claim 2, wherein
the rib includes:
a central portion positioned at a center of the rib, and
a first step portion disposed on a first side end of the central portion and a second step portion disposed on a second side end of the central portion,
wherein the first step portion and the second step portion have a thickness smaller than that of the central portion.

13. The shim plate of claim 1, wherein a thickness tolerance of the shim plate falls in a range from 99% to 102%.

14. A slot die coater comprising:
a first die block;
a second die block configured to face the first die block; and
a shim plate of claim 1, the shim plate being interposed between the first die block and the second die block to define a slot.

15. A method for manufacturing a shim plate, comprising:
preparing a shim body;
cleaning a surface of the shim body to remove contaminants;
coating at least one coating layer on the shim body by a spray method or a multiple-overlapping coating method; and
curing the coating layer.
